(19) **Europäisches Patentamt**
**European Patent Office**
**Office européen des brevets**

(11) **EP 1 609 236 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(21) Anmeldenummer: **03779662.0**

(22) Anmeldetag: **21.10.2003**

(51) Int Cl.:
**H02P 7/06** (2006.01)

(86) Internationale Anmeldenummer:
**PCT/DE2003/003480**

(87) Internationale Veröffentlichungsnummer:
**WO 2004/082121 (23.09.2004 Gazette 2004/39)**

(54) **VERFAHREN UND STEUEREINHEIT ZUR ANSTEUERUNG VON LÜFTERMOTOREN**

METHOD AND CONTROL UNIT FOR CONTROLLING FAN MOTORS

PROCEDE ET UNITE DE COMMANDE POUR COMMANDER DES MOTEURS VENTILES

(84) Benannte Vertragsstaaten:
**DE FR**

(30) Priorität: **13.03.2003 DE 10310830**

(43) Veröffentlichungstag der Anmeldung:
**28.12.2005 Patentblatt 2005/52**

(73) Patentinhaber: **ROBERT BOSCH GMBH**
**70442 Stuttgart (DE)**

(72) Erfinder:
• **BUERK, Peter**
**77839 Lichtenau-Grauelsbaum (DE)**

• **KOCH, Stefan**
**77855 Achern (DE)**
• **PREIS, Karl**
**77830 Bühlertal (DE)**

(56) Entgegenhaltungen:
**DE-U- 20 215 697     US-B1- 6 262 896**

• **PATENT ABSTRACTS OF JAPAN vol. 015, no. 501 (M-1193), 18. Dezember 1991 (1991-12-18) & JP 03 220019 A (MAZDA MOTOR CORP), 27. September 1991 (1991-09-27)**

**Beschreibung**

Die Erfindung betrifft ein Verfahren zur Ansteuerung von Lüftermotoren mit Pulsweitenmodulationssignalen. Die Erfindung betrifft weiterhin eine Steuereinheit, um Lüftermotoren zu betreiben.

Zum Kühlen von Verbrennungsmotoren werden häufig.mehr als ein Lüfter eingesetzt, wobei die Lüfter über eine gemeinsame Steuereinheit angesteuert werden. Die Lüfter können nahezu beliebig mit Hilfe eines Pulsweitenmodulationssignals angesteuert werden, um die Stärke der Gebläseleistung einzustellen. Jeder der Lüftermotoren wird über eine Schalteinrichtung, vorzugsweise einen Feldeffektleistungstransistor mit einer gemeinsamen Versorgungsleitung verbunden. Die Feldeffektleistungstransistoren werden mit Hilfe des Pulsweitenmodulationssighals periodisch angesteuert, wobei ein Tastverhältnis des Pulsweitenmodulationssignals angibt, für welchen zeitlichen Anteil einer Signalperiode der Feldeffektleistungstransistor durchgeschaltet bzw. gesperrt ist.

Aus der WO 98/58445 ist ein Verfahren zur Ansteuerung wenigstens zweier elektrischer Verbraucher bekannt. Dazu ist eine gemeinsame Schaltungsanordnung mit pulsweitenmodulierten Signalen vorgesehen, wobei ein während einer Pulspause der pulsweitenmodulierten Signale fließender, von einer Induktivität der elektrischen Verbindungsleitungen abhängiger Zuleitungsstrom von einer Pufferkapazität aufgenommen wird. Die pulsweitenmodulierten Signale werden zeitlich versetzt generiert. Bevorzugt werden die pulsenweitenmodulierten Signale zeitlich derart versetzt generiert, dass bei einer Überlagerung der pulsweitenmodulierten Signale eine gleichzeitige Pulspause aller pulsweitenmodulierten Signale vermieden wird. In einer Schaltungsanordnung, mit zwei elektrischen Verbrauchern, lassen sich diese mit pulsweitenmodulierten Signalen ansteuern, die ein Tastverhältnis von 50% aufweisen und die um eine halbe Periodendauer zeitlich versetzt sind.

Das periodische Schalten der Feldeffektleistungstransistoren bewirkt Spannungsschwankungen auf der Versorgungsleitung, die sich störend auf das gesamte Versorgungsnetz auswirken können. Um diese leitungsgebundenen Störungen zu reduzieren, ist üblicherweise eine Kapazität in Form eines Elektrolytkondensators vorgesehen, der auf der Versorgungsleitung ein Tiefpassfilter bildet und so die Spannungsschwankungen auf der Versorgungsleitung glättet.

Durch das Schalten der Feldeffektleistungstransistoren wird die Kapazität durch einen Wechselstrom belastet. Die Belastung ist im Wesentlichen abhängig von den Motorströmen und dem Tastverhältnis. Jeder der Lüftermotoren verursacht abhängig von dem jeweiligen Tastverhältnis des Pulsweitenmodulationssignals, mit dem der jeweilige Lüftermotor angesteuert wird, einen Wechselstromfluss in der Kapazität.

Der Wechselstromfluss durch die Kapazität belastet diese, wobei die Kapazität im Allgemeinen durch den Strom erwärmt wird. Insbesondere bei der üblichen Verwendung eines Elektrolytkondensators als Kapazität wird durch die Erwärmung die Lebensdauer des Bauteils erheblich vermindert, da beispielsweise das Elektrolyt des Elektrolytkondensators austrocknen kann.

Es ist daher Aufgabe der vorliegenden Erfindung, ein Verfahren und eine Vorrichtung bereitzustellen, um bei der Ansteuerung von zwei oder mehr Lüftermotoren die Lebensdauer der Kapazität zu erhöhen.

Diese Aufgabe wird durch das Verfahren nach Anspruch 1 sowie die Steuereinheit nach Anspruch 4 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zur Ansteuerung eines ersten Lüftermotors mit einem ersten Pulsweitenmodulationssignal und eines zweiten Lüftermotors mit einem zweiten Pulsweitenmodulationssignal vorgesehen. Durch den Betrieb des ersten und/oder des zweiten Lüftermotors gemäß einer vorgegebenen Solllüftleistung wird eine Gesamtlüftleistung erbracht. Beide Lüftermotoren sind mit einem Kapazitätsbauelement verbunden, um Spannungsschwankungen auf einer Versorgungsspannungsleitung zu glätten. Die zeitlichen Lagen und die Tastverhältnisse des ersten und des zweiten Pulsweitenmodulationssignals werden derart aufeinander abgestimmt, dass der Strom durch das Kapazitätsbauelement bei bestimmten ersten Tastverhältnissen und bestimmten zweiten Tastverhältnissen jeweils ein lokales Minimum aufweist. Zum Einstellen der Solllüftleistung wird der Wert des ersten Tastverhältnisses auf eines der lokalen Minima festgelegt, wobei das zweite Tastverhältnis so gewählt wird, um die Gesamtlüftleistung zu erreichen. Auf diese Weise wird der durch einen der Lüftermotoren bewirkte Strom durch das Kapazitätsbauelement minimiert und somit für die vorgegebene Solllüftleistung ebenfalls ein lokales Minimum für den Strom durch das Kapazitätsbauelement erreicht. Dadurch erwärmt sich das Kapazitätsbauelement weniger, so dass die Lebensdauer der Kapazität erhöht wird.

Vorzugsweise wird das bestimmte erste Tastverhältnis, bei dem der Strom durch das Kapazitätsbauelement ein lokales Minimum aufweist, so gewählt, dass der Wert des bestimmten ersten Tastverhältnisses einen möglichst geringen Abstand zu dem Wert des zweiten Tastverhältnisses aufweist. Auf diese Weise kann vermieden werden, dass die Ansteuerung der Lüftermotoren sehr unterschiedlich ist, so dass eine sehr ungleichmäßige Gesamtlüftleistung über die zu belüftende Fläche z.B. bei nebeneinander angeordneten Lüftermotoren erreicht wird. Darüber hinaus kann so vermieden werden, dass einer der Lüftermotoren mit einer sehr hohen Leistung angesteuert wird, während ein anderer Lüftermotor nur mit einer sehr geringen Leistung an angesteuert wird, wodurch sich die Abnutzung der Lüftermotoren ungleichmäßig verteilt.

Es kann weiterhin vorgesehen sein, dass bei kontinuierlicher Änderung der Solllüftleistung der Wert des ersten Tastverhältnisses geändert wird, während der Wert des zweiten Tastverhältnisses auf einem bestimmten Tastverhältnis gehalten wird, bei dem der Strom durch das Kapazitätsbauelement ein lokales Minimum aufweist. Nach Erreichen eines nächsten lokalen Minimums durch das erste Tastverhältnis wird das erste Tastverhältnis auf dem erreichten Minimum gehalten und das zweite Tastverhältnis entsprechend der Änderung der Solllüftleistung geändert. Auf diese Weise wird ein gleichmäßiges Hochfahren oder Herunterfahren der Gesamtlüftleistung der Lüftermotoren erreicht, wobei immer einer der Lüftermotoren auf einer konstanten Lüftleistung gehalten wird, während der jeweils andere Lüftermotor entsprechend der Solllüftleistung angesteuert wird. Auf diese Weise wird jeweils einer der Lüftermotoren so angesteuert, dass der durch den jeweiligen Lüftermotor bewirkte Strom durch das Kapazitätsbauelement auf einem lokalen Minimum ist.

Gemäß einem weiteren Aspekt der vorliegenden Erfindung ist eine Steuereinheit zur Ansteuerung eines ersten Lüftermotors mit einem ersten Pulsweitenmodulationssignal mit einem ersten Tastverhältnis und eines zweiten Lüftermotors mit einem zweiten Pulsweitenmodulationssignal mit einem zweiten Tastverhältnis vorgesehen. Die Steuereinheit empfängt einen Solllüftleistungswert und generiert das erste und das zweite Pulsweitenmodulationssignal. Ein Kapazitätsbauelement ist mit den Lüftermotoren verbunden, um Spannungsschwankungen auf einer Versorgungsspannungsleitung zu glätten. Die Steuereinheit ist so gestaltet, um die zeitlichen Lagen und die Tastverhältnisse des ersten und des zweiten Pulsweitenmodulationssignals so aufeinander abzustimmen, dass der Strom durch das Tiefpassfilter bei bestimmten ersten Tastverhältnissen und bestimmten zweiten Tastverhältnissen jeweils ein lokales Minimum aufweist, wobei die Steuereinheit zum Einstellen der Solllüftleistung den Wert des ersten Tastverhältnisses auf eines der lokalen Minima festlegt, und wobei das zweite Tastverhältnis so gewählt wird, um die Solllüftleistung zu erreichen.

Auf diese Weise kann eine Steuereinheit zur Verfügung gestellt werden, die mit Hilfe eines ersten und eines zweiten Pulsweitenmodulationssignals einen ersten und einen zweiten Lüftermotor ansteuert, so dass der Strom durch ein mit beiden Lüftermotoren verbundenes Kapazitätsbauelement möglichst minimiert werden kann.

Vorzugsweise kann die Steuereinheit eine Zuordnungseinrichtung aufweisen, in der jedem Solllüftleistungswert das erste und das zweite Tastverhältnis zugeordnet ist. Die Zuordnungseinrichtung kann beispielsweise eine Tabelle sein, in der jeder Solllüftleistung die Tastverhältnisse zugewiesen sind. Die Zuordnungseinrichtung kann auch gemäß einer Berechnungsformel aus jedem Solllüftleistungswert das erste und das zweite Tastverhältnis ermitteln. Dies hat den Vorteil, dass bei einer nicht linearen Abhängigkeit zwischen den Tastverhältnissen und den Solllüftleistungswerten die Solllüftleistung exakt durch die Tastverhältnisse einstellbar ist.

Eine bevorzugte Ausführungsform der Erfindung wird im Folgenden anhand der beigefügten Zeichnungen näher erläutert. Es zeigen:

Fig. 1 ein Schaltbild für ein Lüftersystem gemäß einer bevorzugten Ausführungsform der Erfindung;
Fig. 2A, 2B Funktionsverläufe für den Strom durch das Kapazitätsbauelement in Abhängigkeit von dem Tastverhältnis; und
Fig. 3 ein Messwertdiagramm für den Strom durch das Kapazitätsbauelement.

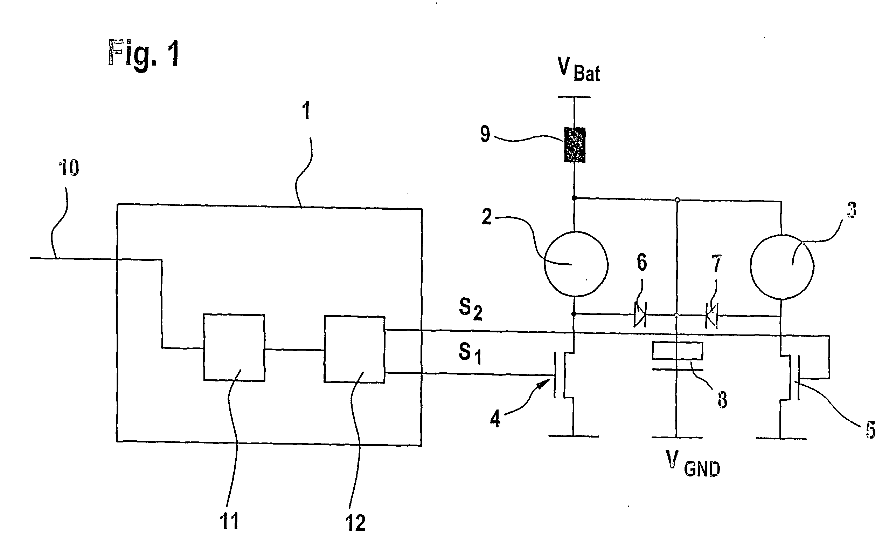

In Fig. 1 ist ein Schaltbild eines Lüftersystems gemäß einer Ausführungsform der Erfindung dargestellt. Das Lüftersystem weist eine Steuereinheit 1 auf, die zur Ansteuerung eines ersten Lüftermotors 2 ein erstes Pulsweitenmodulationssignal S1 und zur Ansteuerung eines zweiten Lüftermotors 3 ein zweites Pulsweitenmodulationssignal S2 ausgibt. Das erste Pulsweitenmodulationssignal S1 ist an eine erste Schalteinrichtung 4 und das zweite Pulsweitenmodulationssignal S2 an eine zweite Schalteinrichtung 5 angelegt. Die Schalteinrichtungen 4, 5 sind vorzugsweise als Feldeffektleistungstransistoren ausgebildet.

Die Feldeffektleistungstransistoren 4, 5 werden gemäß dem jeweiligen ersten oder zweiten Pulsweitenmodulationssignal S1, S2 durchgeschaltet oder gesperrt. Die Pulsweitenmodulationssignale S1, S2 sind periodisch, wobei ein jeweiliges Tastverhältnis angibt, für welche anteilige Zeitdauer innerhalb der Periodendauer die jeweilige Schalteinrichtung 4, 5 durchgeschaltet ist.

Der erste Feldeffektleistungstransistor 4 ist in Serie mit dem ersten Lüftermotor 2 geschaltet, so dass über dem ersten Lüftermotor 3 bei einer durchgeschalteten ersten Schalteinrichtung 4 eine Versorgungsspannung $V_{Bat}$ anliegt und wobei der erste Lüftermotor 2 von der Versorgungsspannung $V_{Bat}$ getrennt wird, wenn die erste Schalteinrichtung 4 ausgeschaltet wird.

Das Gleiche gilt für den zweiten Lüftermotor 3. Je nach Zustand des an den zweiten Feldeffektleistungstransistor 5 angelegten Pulsweitenmodulationssignals S2 ist der zweite Feldeffektleistungstransistor 5 durchgeschaltet oder nicht und legt damit die Versorgungsspannung $V_{Bat}$ an den zweiten Lüftermotor 3 an oder trennt die Versorgungsspannung $V_{Bat}$ von dem zweiten Lüftermotor 3.

Um die bei Ausschalten der Feldeffektleistungstransistoren 4, 5 in den Lüftermotoren 2, 3 entstehenden Freilaufspannungen abzuführen, sind eine erste Freilaufdiode 6 und eine zweite Freilaufdiode 7 vorgesehen.

Zwischen einem an jeweils ersten Anschlüssen der Lüftermotoren 2, 3 anliegenden ersten Versorgungsspannungspotenzial $V_{BAT}$ und einem zweiten Versorgungsspannungspotenzial $V_{GND}$, das vorzugsweise ein Massepotenzial ist, ist eine gemeinsame Kapazität in Form eines Elektrolytkondensators 8 vorgesehen. Der Elektrolytkondensator 8 dient als Tiefpassfilter und glättet die auf den Versorgungsspannungsleitungen auftretenden Spannungsschwankungen. Die Spannungsschwankungen resultieren aus dem Ein- und Ausschalten der Schalteinrichtungen 4, 5. Zusätzlich kann zur Glättung der Spannungsschwankungen auf den Versorgungsspannungsleitungen eine Drosselspule 9 vorgesehen sein, die mit den ersten Anschlüssen der Lüftermotoren 2, 3 und dem hohen Versorgungsspannungspotenzial $V_{BAT}$ verbunden ist.

Die Lüftermotoren 2, 3 dienen z.B. zur Belüftung eines Kühlsystems, wobei eine gemeinsame Gesamtlüftleistung erreicht werden soll. Die Lüftleistung der Lüftermotoren 2, 3 ist variabel und unabhängig voneinander einstellbar und wird gemäß einer jeweiligen Solllüftleistung, die durch einen Solllüftleistungswert über eine Steuerleitung 10 vorgegeben wird, bestimmt.

Der Elektrolytkondensator 8 ist üblicherweise das am schnellsten alternde Bauelement im Gesamtsystem, wobei die Alterung erheblich durch die Erwärmung des Elektrolytkondensators 8 beschleunigt wird. Beim Ein- und Ausschalten der Feldeffektleistungstransistoren 4, 5 wird eine Spannungsschwankung auf den Versorgungsleitungen bewirkt, die zu einem Stromfluss in dem Elektrolytkondensator 8 führt.

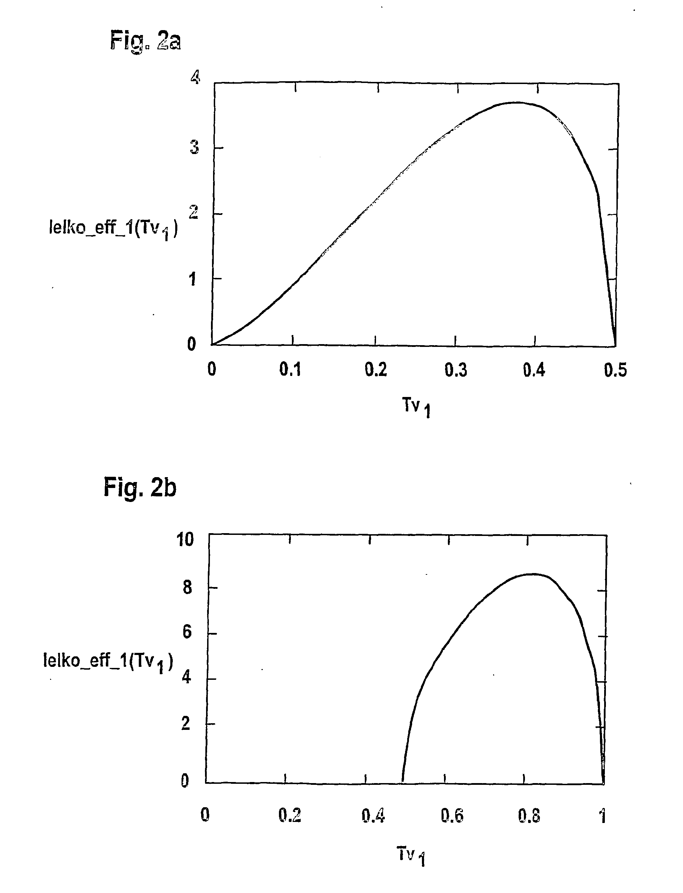

In den Figuren 2A und 2B sind für die Tastverhältnisse zwischen 0 und 1 der von dem ersten Lüftermotor 2 und der ersten Schalteinrichtung 4 bewirkte effektive Strom durch den Elektrolytkondensator 8 dargestellt. Aufgrund der erheblich unterschiedlichen Höhe des effektiven Stromes durch den Elektrolytkondensator 8 ist in Fig. 2A der Verlauf des effektiven Stromes $I_{elko\_eff\_1}(Tv_1)$ für ein Tastverhältnis $Tv_1$ zwischen 0 und 0,5 und in Fig. 2B der Verlauf des effektiven Stromes $I_{elko\_eff\_1}(Tv_1)$ für ein Tastverhältnis $Tv_1$ zwischen 0,5 und 1 dargestellt. Der maximale Motorstrom $I_{mot\_max}$ ist dabei mit 22,8 A vorgegeben. Die Figuren 2A, 2B zeigen den Verlauf des effektiven Stromes durch den Elektrolytkondensator 8 bei gleichen Tastverhältnissen $Tv_1$, $Tv_2$ der beiden Pulsweitenmodulationssignale $S_1$, $S_2$.

Man erkennt, dass der Verlauf des effektiven Stromes $I_{eno\_eff\_1}(Tv_1)$ bei einem Tastverhältnis $Tv_1$ von 0, 0, 5 und 1 jeweils lokale Minima erreicht. D.h., wird der Lüftermotor mit einem Tastverhältnis $Tv_1$ von 0,5 oder 1 betrieben, so ist der Wert des effektiven Stromes durch den Elektrolytkondensator 8 minimal, im idealen Fall gleich null.

Man erkennt, dass der Strom durch den Elektrolytkondensator 8 bei Tastverhältnissen $Tv_1$, $Tv_2$ zwischen 0,5 und 1 deutlich höhere Werte annehmen kann als bei Tastverhältnissen $Tv_1$, $Tv_2$ zwischen 0 und 0,5. Insbesondere erkennt man, dass der Strom bei Werten der Tastverhältnisse $Tv_1$, $Tv_2$ zwischen 0,8 und 0,9 am höchsten ist.

Die Kondensatorbelastung bei einem Tastverhältnis $Tv_1$, $Tv_2$ von 0,5 ist deswegen im Wesentlichen 0, da die Freilaufströme der beiden Lüftermotoren über die Freilaufdioden 6, 7 jeweils während ihrer Freilaufzeit annähernd gleich und damit über die Gesamtperiode konstant sind. Damit erfolgt keine Ladung oder Entladung des Elektrolytkondensators 8.

Es wird nun vorgeschlagen, die beiden Lüftermotoren 2, 3 so anzusteuern, dass jeweils einer der Lüftermotoren 2, 3 auf einem lokalen Minimum gehalten wird und mit dem anderen Lüftermotor die darüber hinaus benötigte Lüftleistung erbracht wird, die zum Erreichen der Gesamtlüftleistung benötigt wird.

Beispielsweise wäre der effektive Strom durch den Elektrolytkondensator 8 bei zwei identischen Lüftermotoren, die beide mit einem Tastverhältnis $Tv_1$, $Tv_2$ von 0,55 angetrieben werden, gemäß dem Schaubild nach Fig. 2B der gesamte effektive Strom durch den Elektrolytkondensator 8 etwa 8 A (= 2 x 4 A). Würde man nun das Tastverhältnis $Tv_1$, $Tv_2$ für einen der beiden Lüftermotoren 2, 3 auf 0,5 festlegen, so müsse der jeweils andere Lüftermotor die fehlende Lüftleistung des ersten Lüftermotors ausgleichen und benötigte ein größeres Tastverhältnis $Tv_1$, $Tv_2$, um dies zu erreichen. Auch wenn die Lüftleistung nicht proportional zu den Tastverhältnissen $Tv_1$, $Tv_2$ der Lüftermotoren 2, 3 verläuft, ist im Allgemeinen zu erwarten, dass das benötigte Tastverhältnis $Tv_2$ für den zweiten Lüftermotor 3 den Wert 0,7 nicht übersteigt (0,7 = Tastverhältnis bei 8 A = 2 x 4A). Mit der Vorgehensweise, das Pulsweitenmodulationssignal für einen der beiden Lüftermotoren 2, 3 mit einem Tastverhältnis $Tv_1$, $Tv_2$ vorzusehen, bei dem der effektive Strom durch den Elektrolytkondensator 8 ein lokales Minimum aufweist, hat den Vorteil, dass der effektive Strom durch den Elektrolytkondensator 8 verringert werden kann, ohne dass die Lüftleistung verändert wird.

Um den geforderten Solllüftleistungswert einem ersten und einem zweiten Tastverhältnis $Tv_1$, $Tv_2$ zuordnen zu können, ist eine Zuordnungseinheit 11 in der Steuereinheit 1 vorgesehen, in der gemäß dem beschriebenen Ansteuerverfahren einem vorgegebenen Solllüftleistungswert das erste und zweite Tastverhältnis $Tv_1$, $Tv_2$ zugeordnet werden. Das erste und zweite Tastverhältnis $Tv_1$, $Tv_2$ werden an eine Pulsweitenmodulationseinheit 12 übertragen, die die Pulsweitenmodulationssignale $S_1$, $S_2$ generiert.

Im Wesentlichen sind die Tastverhältnisse $Tv_1$, $Tv_2$ so ausgewählt, dass das erste Tastverhältnis $Tv_1$ zu einem lokalen Minimum des Stroms durch den Elektrolytkondensator 8 führt, so dass mit der Auswahl des zweiten Tastverhältnisses $Tv_2$ die geforderte Gesamtlüftleistung erreicht werden kann. Stehen mehrere lokale Minima für den effektiven Strom durch den Elektrolytkondensator 8 zur Verfügung, so wird das Verhältnis ausgewählt, bei dem der Gesamtstrom durch den Elektrolytkondensator 8 am geringsten ist.

Weiterhin ist bei dem ersten und zweiten Pulsweitenmodulationssignal $S_1$, $S_2$ darauf zu achten, dass die Zeiten, zu denen beide Feldeffektleistungstransistoren 4, 5 ausgeschaltet sind, möglichst gering gehalten werden, bzw. vollständig vermieden werden. Liegen die Werte des ersten und zweiten Tastverhältnisses beide unter 0,5, so werden die Einschaltzeiten für den ersten und zweiten Feldeffektleistungstransistor 4, 5 so gelegt, dass sich die Einschaltzeiten nicht überlappen. Liegen die Tastverhältnisse beide über einen Wert von 0,5, so werden die Einschaltzeiten während einer Periode so gelegt, dass immer mindestens einer der beiden Feldeffektleistungstransistoren 4, 5 durchgeschaltet ist. Dies ist vorteilhaft, da dadurch die Spannungsschwankungen auf den Versorgungsleitungen geringer sind, als wenn sich die Einschaltzeit beider Pulsweitenmodulationssignale $S_1$, $S_2$ im Wesentlichen überdecken.

Wird die vorgegebene Gesamtlüftleistung kontinuierlich geändert, so wird möglichst immer nur eines der beiden Tastverhältnisse $Tv_1$, $Tv_2$ geändert, während das jeweils andere Tastverhältnis auf einem Wert gehalten wird, der einem lokalen Minimum für den Stromfluss durch den Elektrolytkondensator 8 entspricht. Erreicht das Pulsweitenmodulationssignal mit dem sich ändernden Tastverhältnis einen Wert, an dem ein lokales Minimum für den Stromfluss durch den Elektrolytkondensator 8 existiert, so wird dieses Tastverhältnis beibehalten und das Tastverhältnis des zuvor festgehaltenen Wertes entsprechend der sich ändernden vorgegebenen Solllüftleistung angepasst.

Auf diese Weise kann vermieden werden, dass die Tastverhältnisse der Pulsweitenmodulationssignale $S_1$, $S_2$ zu stark voneinander differieren, da sie jeweils einander nachgeführt werden.

Die in den Figuren 2A, 2B dargestellten Funktionsverläufe ergeben sich aus nachfolgenden Gleichungen:

$$I_{elko\_aus\_1}(Tv_1) := (Tv_1)^2 \cdot I_{mot\_max\_1}$$

und

$$I_{elko\_ein\_1}(Tv_1) := (1 - Tv_1) \cdot Tv_1 \cdot I_{mot\_max\_1}$$

sowie

$$I_{elko\_aus\_2}(Tv_2) := (Tv_2)^2 \cdot I_{mot\_max\_2}$$

und

$$I_{elko\_ein\_2}(Tv_2) := (1 - Tv_2) \cdot Tv_2 \cdot I_{mot\_max\_2},$$

wobei

$I_{elko\_aus\_1}(Tv_1)$ der Ausschaltstrom durch den Elektrolytkondensator 8 bei Ausschalten des ersten Feldeffektleistungstransistors 4, $Tv_1$ das Tastverhältnis des ersten Pulsweitenmodulationssignals $S_1$, $I_{mot\_max\_1}$ der maximale Motorstrom des ersten Lüftermotors 2, $I_{elxo\_ein\_1}(Tv_1)$ der Einschaltstrom bei Einschalten des ersten Feldeffektleistungstransistors 4, $I_{elko\_aus\_2}(Tv_2)$ der Ausschaltstrom durch den Elektrolytkondensator 8 bei Ausschalten des zweiten Feldeffektleistungstransistors 5, $Tv_2$ das Tastverhältnis des zweiten Pulsweitenmodulationssignals $S_2$, $I_{mot\_max\_2}$ der maximale Motorstrom des zweiten Lüftermotors 3, und $I_{elko\_ein\_2}(Tv_2)$ der Einschaltstrom durch den Elektrolytkondensator 8 aufgrund des Einschaltens des zweiten Feldeffektleistungstransistors 5 ist.

Damit ergibt sich für den effektiven Strom durch den Elektrolytkondensator 8 bei der Annahme, dass die Tastverhältnisse $Tv_1$, $Tv_2$ beide über 0,5 liegen und sich deren Bestromungsphasen optimal überdecken:

$$I_{elko\_eff\_1}(Tv_1) = \sqrt{\frac{1}{T}\left[\begin{array}{l}\int_0^{(1-Tv_1)T}(I_{elko\_aus\_1}(Tv_1) - I_{elko\_ein\_2}(Tv_1))^2 dt \; + \\[2mm] \int_{(1-Tv_1)T}^{Tv_1 T}(I_{elko\_ein\_1}(Tv_1) + I_{elko\_ein\_2}(Tv_1))^2 dt \; + \\[2mm] \int_{Tv_1 T}^{T}(-I_{elko\_ein\_1}(Tv_1) + I_{elko\_aus\_2}(Tv_1))^2 dt \end{array}\right]}$$

wobei T die Periodendauer des Pulsweitenmodulationssignals ist.

Bei einer nicht optimalen Überdeckung der Bestromungsphasen bei Tastverhältnissen $Tv_1$, $Tv_2 > 0{,}5$ ergibt sich hingegen:

$$I_{elko\_eff\_1}(Tv_1) = \sqrt{\frac{1}{T}\left[\begin{array}{l}\int_0^{(1-Tv_1)T}(I_{elko\_aus\_1}(Tv_1) - I_{elko\_ein\_2}(Tv_1))^2 dt \; + \\[2mm] \int_{(1-Tv_1)T}^{Tv_1 T}(I_{elko\_aus\_1}(Tv_1) + I_{elko\_aus\_2}(Tv_1))^2 dt \; + \\[2mm] \int_{Tv_1 T}^{T}(-I_{elko\_ein\_1}(Tv_1) + I_{elko\_aus\_2}(Tv_1))^2 dt \end{array}\right]}$$

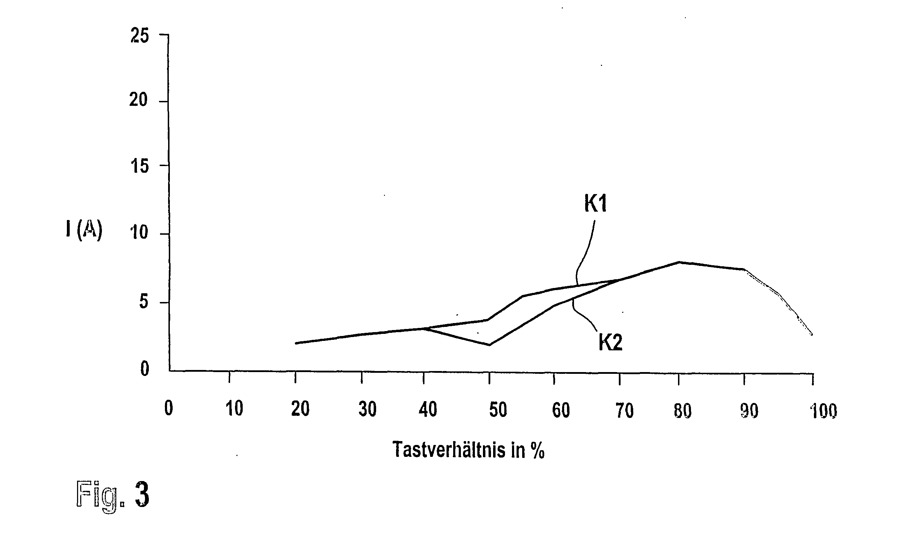

Dies ist in dem Diagramm nach Fig. 3 dargestellt. Man erkennt die Verläufe des effektiven Stromes durch den Elektrolytkondensator 8, wobei die Kurve K1 den Strom bei einer nicht optimalen Überdeckung der Bestromungsphasen und die Kurve K2 den Strom bei einer optimalen Überdeckung der Bestromungsphasen darstellt.

Die nicht optimale Überdeckung der Bestromungsphasen bedeutet, dass bei Tastverhältnissen $Tv_1$, $Tv_2$ über 0,5 noch Zeiten während einer Periodendauer vorkommen, in denen beide Feldeffektleistungstransistoren 4, 5 ausgeschaltet sind. Gemäß einer optimalen Überdeckung werden bei Tastverhältnissen $Tv_1$, $Tv_2 > 0{,}5$ die Schaltzeiten der beiden Feldeffektleistungstransistoren 4, 5 so gelegt, dass immer mindestens einer der beiden Feldeffektleistungstransistoren 4, 5 durchgeschaltet ist. Bei Tastverhältnissen $Tv_1$, $Tv_2 < 0{,}5$ werden die Zeiten, zu denen die Feldeffektleistungstransistoren 4, 5 durchgeschaltet sind, möglichst nicht überlappend gelegt, um so die Zeit, während der keine der beiden Feldeffektleistungstransistoren 4, 5 durchgeschaltet ist, möglichst zu minimieren. Dies dient dazu, die Spannungsschwankungen auf den Versorgungsleitungen möglichst gering zu halten.

Aus Fig. 3 erkennt man, dass der effektive Strom durch den Elektrolytkondensator 8 bei Tastverhältnissen $Tv_1$, $Tv_2$ zwischen 0,4 und 0,7 deutlich geringer ist, wenn durch die Einschaltzeiten der Feldeffektleistungstransistoren 4, 5 möglichst wenig oder gar keine Pausen entstehen, während der keine der Feldeffektleistungstransistoren 4, 5 durchgeschaltet sind.

**Patentansprüche**

1.   Verfahren zur Ansteuerung eines ersten Lüftermotors (2) mit einem ersten Pulsweitenmodulationssignal ($S_1$) mit einem ersten Tastverhältnis ($Tv_1$) und eines zweiten Lüftermotors (3) mit einem zweiten Pulsweitenmodulationssignal ($S_2$) mit einem zweiten Tastverhältnis ($Tv_2$), wobei durch den Betrieb des ersten und/oder des zweiten Lüftermotors (2, 3) gemäß einer vorgegebenen Solllüftleistung eine Gesamtlüftleistung erbracht wird,
wobei beide Lüftermotoren (2, 3) mit einem Tiefpassfilter (8) verbunden sind, um Spannungsschwankungen auf einer Versorgungsspannungsleitung zu glätten,
**dadurch gekennzeichnet,**
**dass** die zeitlichen Lagen und die Tastverhältnisse ($Tv_1$, $Tv_2$) des ersten und des zweiten Pulsweitenmodulationssignals ($S_1$, $S_2$) derart aufeinander abgestimmt werden, dass der Strom durch das Tiefpassfilter (8) bei bestimmten

ersten Tastverhältnissen (Tv$_1$) und bestimmten zweiten Tastverhältnissen (Tv$_2$) jeweils ein lokales Minimum aufweist, wobei zum Einstellen der Solllüftleistung der Wert des ersten Tastverhältnisses (Tv$_1$) auf eines der lokalen Minima festgelegt wird, und wobei das zweite Tastverhältnis (Tv$_2$) so gewählt wird, um die Gesamtlüftleistung zu erreichen.

2. Verfahren nach Anspruch 1, **dadurch gekennzeichnet, dass** das bestimmte erste Tastverhältnis (Tv$_1$), bei dem der Strom durch das Tiefpassfilter (8) ein lokales Minimum aufweist, so gewählt wird, dass der Wert des bestimmten ersten Tastverhältnisses (Tv$_1$) einen möglichst geringen Abstand zu dem Wert des zweiten Tastverhältnisses (Tv$_2$) aufweist.

3. Verfahren nach Anspruch 1, **dadurch gekennzeichnet, dass** bei kontinuierlicher Änderung der Solllüftleistung der Wert des ersten Tastverhältnisses (Tv$_1$) geändert wird, während der Wert des zweiten Tastverhältnisses (Tv$_2$) auf einem bestimmten Tastverhältnis gehalten wird, bei dem der Strom durch das Tiefpassfilter (8) ein lokales Minimum aufweist, wobei nach Erreichen eines lokalen Minimums durch das erste Tastverhältnis (Tv$_1$) das erste Tastverhältnis (Tv$_1$) auf dem erreichten Minimum gehalten wird und das zweite Tastverhältnis (Tv$_2$) entsprechend der Änderung der Solllüftleistung geändert wird.

4. Steuereinheit (1) zur Ansteuerung eines ersten Lüftermotors (2) mit einem ersten Pulsweitenmodulationssignal (S$_1$) mit einem ersten Tastverhältnis (Tv$_1$) und eines zweiten Lüftermotors (3) mit einem zweiten Pulsweitenmodulationssignal (S$_2$) mit einem zweiten Tastverhältnis (Tv$_2$), wobei die Steuereinheit zum Empfangen eines Solllüftleistungswertes und Generieren des ersten und des zweiten Pulsweitenmodulationssignals (S$_1$, S$_2$) ausgestaltet ist, wobei für die Lüftermotoren (2, 3) ein Tiefpassfilter (8) vorgesehen ist, um Spannungsschwankungen auf einer Versorgungsspannungsleitung zu glätten,
**dadurch gekennzeichnet,**
**dass** die Steuereinheit (1) derart gestaltet ist, um die zeitlichen Lagen und die Tastverhältnisse (Tv$_1$, Tv$_2$) des ersten (S$_1$) und des zweiten Pulsweitenmodulationssignals (S$_2$) aufeinander abzustimmen, dass der Strom durch das Tiefpassfilter (8) bei bestimmten ersten Tastverhältnissen (Tv$_1$) und bestimmten zweiten Tastverhältnissen (Tv$_2$) jeweils ein lokales Minimum aufweist, wobei die Steuereinheit (1) zum Einstellen der Solllüftleistung den Wert des ersten Tastverhältnisses (Tv$_1$) auf eines der lokalen Minima festlegt, und wobei das zweite Tastverhältnis (Tv$_2$) so gewählt wird, um die Solllüftleistung zu erreichen.

5. Steuereinheit (1) nach Anspruch 4, **dadurch gekennzeichnet, dass** die Steuereinheit (1) das bestimmte erste Tastverhältnis (Tv$_1$), bei dem der Strom durch das Tiefpassfilter (8) ein lokales Minimum aufweist, so auswählt, dass der Wert des bestimmten ersten Tastverhältnisses (Tv$_1$) einen möglichst geringen Abstand zu dem Wert des zweiten Tastverhältnisses (Tv$_2$) aufweist.

6. Steuereinheit (1) nach Anspruch 5, **dadurch gekennzeichnet, dass** die Steuereinheit (1) eine Zuordnungseinrichtung (11) aufweist, in der jedem Solllüftleistungswert das erste (Tv$_1$) und das zweite Tastverhältnis (Tv$_2$) zugeordnet ist.

7. Steuereinheit (1) nach einem der Ansprüche 5 oder 6, **dadurch gekennzeichnet, dass** die Steuereinheit (1) zum Erreichen der vorgegebenen Solllüftleistung den Wert des ersten Tastverhältnisses (Tv$_1$) kontinuierlich ändert, während der Wert des zweiten Tastverhältnisses (Tv$_2$) auf einem bestimmten Tastverhältnis gehalten wird, bei dem der Strom durch das Tiefpassfilter (8) ein lokales Minimum aufweist, wobei die Steuereinheit (1) das erste Tastverhältnis (Tv$_1$) nach Erreichen eines lokalen Minimums auf dem erreichten Minimum hält und das zweite Tastverhältnis (Tv$_2$) entsprechend der vorgegebenen Solllüftleistung ändert.

8. Lüftersystem mit einer Steuereinheit (1) nach Anspruch 5 bis 7 und einem daran angeschlossenen ersten Lüftermotor (2) und zweiten Lüftermotor (3).

**Claims**

1. Method for controlling a first fan motor (2) using a first pulse width modulation signal (S$_1$) having a first duty ratio (Tv$_1$) and for controlling a second fan motor (3) using a second pulse width modulation signal (S$_2$) having a second duty ratio (Tv$_2$), a total air output being produced by operating the first and/or second fan motor (2, 3) according to a predefined desired air output,
both fan motors (2, 3) being connected to a low-pass filter (8) in order to smooth voltage fluctuations on a supply voltage line,
**characterized in that**
the temporal positions and duty ratios ($Tv_1$, $Tv_2$) of the first and second pulse width modulation signals ($S_1$, $S_2$) are matched to one another in such a manner that the current through the low-pass filter (8) has a respective local minimum for particular first duty ratios ($Tv_1$) and particular second duty ratios ($Tv_2$), the value of the first duty ratio ($Tv_1$) being set to one of the local minima in order to set the desired air output, and the second duty ratio ($Tv_2$) being selected so as to achieve the total air output.

2. Method according to Claim 1, **characterized in that** the particular first duty ratio ($Tv_1$) for which the current through the low-pass filter (8) has a local minimum is selected in such a manner that the value of the particular first duty ratio ($Tv_1$) is at the shortest possible distance from the value of the second duty ratio ($Tv_2$).

3. Method according to Claim 1, **characterized in that,** as the desired air output is continuously changed, the value of the first duty ratio ($Tv_1$) is changed, while the value of the second duty ratio ($Tv_2$) is held at a particular duty ratio for which the current through the low-pass filter (8) has a local minimum, in which case, after a local minimum has been reached by the first duty ratio ($Tv_1$), the first duty ratio ($Tv_1$) is held at the minimum reached and the second duty ratio ($Tv_2$) is changed in a manner corresponding to the change in the desired air output.

4. Control unit (1) for controlling a first fan motor (2) using a first pulse width modulation signal ($S_1$) having a first duty ratio ($Tv_1$) and for controlling a second fan motor (3) using a second pulse width modulation signal ($S_2$) having a second duty ratio ($Tv_2$), the control unit being configured to receive a desired air output value and to generate the first and second pulse width modulation signals ($S_1$, $S_2$),
a low-pass filter (8) being provided for the fan motors (2, 3) in order to smooth voltage fluctuations on a supply voltage line,
**characterized in that**
the control unit (1) is configured so as to match the temporal positions and duty ratios ($Tv_1$, $Tv_2$) of the first ($S_1$) and second ($S_2$) pulse width modulation signals to one another in such a manner that the current through the low-pass filter (8) has a respective local minimum for particular first duty ratios ($Tv_1$) and particular second duty ratios ($Tv_2$), the control unit (1) setting the value of the first duty ratio ($Tv_1$) to one of the local minima in order to set the desired air output, and the second duty ratio ($Tv_2$) being selected so as to achieve the desired air output.

5. Control unit (1) according to Claim 4, **characterized in that** the control unit (1) selects the particular first duty ratio ($Tv_1$) for which the current through the low-pass filter (8) has a local minimum in such a manner that the value of the particular first duty ratio ($Tv_1$) is at the shortest possible distance from the value of the second duty ratio ($Tv_2$).

6. Control unit (1) according to Claim 5, **characterized in that** the control unit (1) has an assignment device (11) in which the first duty ratio ($Tv_1$) and the second duty ratio ($Tv_2$) are assigned to each desired air output value.

7. Control unit (1) according to either of Claims 5 and 6, **characterized in that,** in order to achieve the predefined desired air output, the control unit (1) continually changes the value of the first duty ratio ($Tv_1$), while the value of the second duty ratio ($Tv_2$) is held at a particular duty ratio for which the current through the low-pass filter (8) has a local minimum, in which case, after a local minimum has been reached, the control unit (1) holds the first duty ratio ($Tv_1$) at the minimum reached and changes the second duty ratio ($Tv_2$) in a manner corresponding to the predefined desired air output.

8. Fan system having a control unit (1) according to Claims 5 to 7 and a first fan motor (2) and a second fan motor (3) connected thereto.

**Revendications**

1. Procédé pour l'actionnement d'un premier moteur de ventilateur (2), avec un premier signal de modulation de largeur d'impulsion ($S_1$) avec un premier taux d'impulsion ($Tv_1$), et d'un deuxième moteur de ventilateur (3) avec un deuxième signal de modulation de largeur d'impulsion ($S_2$) avec un deuxième taux d'impulsion ($Tv_2$), dans lequel l'actionnement du premier et/ou du deuxième moteur de ventilateur (2, 3) permet d'obtenir une puissance de ventilation globale selon une puissance de ventilation de consigne prédéfinie,
les deux moteurs de ventilateur (2, 3) étant reliés à un filtre passe-bas (8) pour lisser des fluctuations de tension sur une ligne de tension d'alimentation,

**caractérisé en ce que**
les positions temporelles et les taux d'impulsion ($Tv_1$, $Tv_2$) du premier et du deuxième signal de modulation de largeur d'impulsion ($S_1$, $S_2$) sont accordés les uns aux autres, de telle manière que le courant passant par le filtre passe-bas (8) présente à chaque fois un minimum local pour certains premiers taux d'impulsion ($Tv_1$) et certains deuxièmes taux d'impulsion ($Tv_2$), où, pour le réglage de la puissance de ventilation de consigne, la valeur du premier taux d'impulsion ($Tv_1$) est fixée sur l'un des minima locaux, et où le deuxième taux d'impulsion ($Tv_2$) est choisi de manière à atteindre la puissance de ventilation globale.

2. Procédé selon la revendication 1, **caractérisé en ce que** le certain premier taux d'impulsion ($Tv_1$), avec lequel le courant passant par le filtre passe-bas (8) présente un minimum local, est choisi de telle manière que la valeur du certain premier taux d'impulsion ($Tv_1$) présente un écart réduit le plus possible par rapport à la valeur du deuxième taux d'impulsion ($Tv_2$).

3. Procédé selon la revendication 1, **caractérisé en ce que** lors d'une modification continue de la puissance de ventilation de consigne, la valeur du premier taux d'impulsion ($Tv_1$) est modifiée, tandis que la valeur du deuxième taux d'impulsion ($Tv_2$) est maintenue à un certain taux d'impulsion, avec lequel le courant passant par le filtre passe-bas (8) présente un minimum local, le premier taux d'impulsion ($Tv_1$) étant maintenu au minimum atteint après l'atteinte d'un minimum local par le premier taux d'impulsion ($Tv_1$), et le deuxième taux d'impulsion ($Tv_2$) étant modifié en fonction de la modification de la puissance de ventilation de consigne.

4. Unité de commande (1) pour l'actionnement d'un premier moteur de ventilateur (2) avec un premier signal de modulation de largeur d'impulsion ($S_1$) avec un premier taux d'impulsion ($Tv_1$), et d'un deuxième moteur de ventilateur (3) avec un deuxième signal de modulation de largeur d'impulsion ($S_2$) avec un deuxième taux d'impulsion ($Tv_2$), l'unité de commande étant conçue pour la réception d'une valeur de puissance de ventilation de consigne et pour la génération du premier et du deuxième signal de modulation de largeur d'impulsion ($S_1$, $S_2$), un filtre passe-bas (8) étant prévu pour les moteurs de ventilateur (2, 3), pour lisser des fluctuations de tension sur une ligne de tension d'alimentation,
**caractérisée en ce que**
l'unité de commande (1) est conçue de manière à accorder les positions temporelles et les taux d'impulsion ($Tv_1$, $Tv_2$) du premier ($S_1$) et du deuxième signal de modulation de largeur d'impulsion ($S_2$), **en ce que** le courant passant par le filtre passe-bas (8) présente à chaque fois un minimum local pour certains premiers taux d'impulsion ($Tv_1$) et certains deuxièmes taux d'impulsion ($Tv_2$), où, pour le réglage de la puissance de ventilation de consigne, l'unité de commande (1) fixe la valeur du premier taux d'impulsion ($Tv_1$) sur l'un des minima locaux, et où le deuxième taux d'impulsion ($Tv_2$) est choisi de manière à atteindre la puissance de ventilation de consigne.

5. Unité de commande (1) selon la revendication 4, **caractérisée en ce que** l'unité de commande (1) sélectionne le certain premier taux d'impulsion ($Tv_1$), avec lequel le courant passant par le filtre passe-bas (8) présente un minimum local, de telle manière, que la valeur du certain premier taux d'impulsion ($Tv_1$) présente un écart réduit le plus possible par rapport à la valeur du deuxième taux d'impulsion ($Tv_2$).

6. Unité de commande (1) selon la revendication 5, **caractérisée en ce que** l'unité de commande (1) comporte un dispositif d'attribution (11), dans lequel le premier ($Tv_1$) et le deuxième taux d'impulsion ($Tv_2$) sont attribués à chaque valeur de puissance de ventilation de consigne.

7. Unité de commande (1) selon l'une des revendications 5 ou 6, **caractérisée en ce que** pour atteindre la puissance de ventilation de consigne prédéfinie, l'unité de commande (1) modifie continuellement la valeur du premier taux d'impulsion ($Tv_1$), tandis que la valeur du deuxième taux d'impulsion ($Tv_2$) est maintenue à un certain taux d'impulsion, avec lequel le courant passant par le filtre passe-bas (8) présente un minimum local, l'unité de commande (1) maintenant le premier taux d'impulsion ($Tv_1$) aluminimum atteint après l'atteinte d'un minimum local, et modifiant le deuxième taux d'impulsion ($Tv_2$) en fonction de la puissance de ventilation de consigne prédéfinie.

8. Système de ventilation avec une unité de commande (1) selon les revendications 5 à 7, et avec un premier moteur de ventilateur (2) et un deuxième moteur de ventilateur (3) reliés à celle-ci.

Fig. 1

EP 1 609 236 B1

Fig. 2a

lelko_eff_1(Tv$_1$)

Tv$_1$

Fig. 2b

lelko_eff_1(Tv$_1$)

Tv$_1$

Fig. 3

EP 1 609 236 B1

**IN DER BESCHREIBUNG AUFGEFÜHRTE DOKUMENTE**

**In der Beschreibung aufgeführte Patentdokumente**

- WO 9858445 A